# EUROPEAN PATENT SPECIFICATION

(11) **EP 3 092 644 B1**
(45) Date of publication and mention of the grant of the patent: **25.03.2020**
(21) Application number: 14704389.7
(22) Date of filing: 10.01.2014
(51) Int. Cl.: G11B 27/28

(54) **CAMERA AND CONTROL METHOD THEREFOR**
KAMERA UND STEUERVERFAHREN DAFÜR
CAMÉRA ET SON PROCÉDÉ DE CONTROL

(43) Date of publication of application: 16.11.2016
(73) Proprietor: Sony Corporation, Tokyo 108-0075 (JP)
(72) Inventor: THÖRN, Ola, S-216 12 Limhamn (SE)
(74) Representative: Banzer, Hans-Jörg
(86) International application number: PCT/IB2014/058182
(87) International publication number: WO 2015/104586

(56) References cited:
- WO-A2-02/073950
- WO-A2-2007/082167
- US-A1- 2004 239 817
- US-B1- 6 549 643

## Description

### TECHNICAL FIELD

The present application is directed to methods and systems of segmenting a video recording into different viewing segments and, more particularly to using the motion of a camera recording the video to determine the different segments.

### BACKGROUND

Video players often include a seeker bar that allows a user to browse through a video's timeline. The seeker bar corresponds to the timeline of the video (i.e., a first end of the bar corresponds to the beginning of the video and an opposing second end corresponds to the end of the video). The seeker bar also includes a playhead that moves along the bar to indicate the timing of the video that is currently playing on the display. With many video players, the playhead begins at the first end of the bar and progressively moves towards the second end as the video is playing. By the end of the video, the playhead has reached the second end indicating that video playback is complete.

Navigating a long video by moving the playhead back and forth along the bar often becomes an arduous task. If a user is looking for a particular point in time in the video, they often move the playhead back and forth along the timeline hoping to find the precise moment of interest. This is often difficult for long videos as a given amount of playhead movement along the timeline corresponds to a larger number of video frames. This makes it difficult for the user to move to the precise time of interest. This is also difficult when videos contain repetitive segments.

One way of reducing the problem is to expand the length of the bar. This would provide for a smaller number of frames per unit of movement of the playhead. However, this would require a physically longer bar that would need a larger graphical user interface (GUI) or larger device.

Direct manipulation video navigation (direct manipulation) is one method of addressing this problem. Direction manipulation allows a user to navigate a video by dragging an object on the display along its motion directory. This includes the user placing a cursor (e.g., mouse pointer) over the object on the display. The user is then able to drag the cursor along the motion trajectory. This causes the video player to advance the frames of the video as the cursor drags the object along its motion path on the display. This system is more efficient because the motorspace has increased and maps better to what happens in the scene rather than to the miniscule area of the seeker bar. However, the system also includes drawbacks. This system works well for a few video frames over a relatively short time period. However, it is difficult to drag the object along a longer scene as the motion trajectories become more difficult to follow. Further, if there is a repeated movement of the object (e.g., a wheel rotating), it is easy to become stuck in a loop since it is difficult to follow the trajectory path.

Some direct manipulation systems display a visible line along the motion path to better guide the user on how to drag the object. However, the path may block some of the video content and/or make it difficult to observer the video. Further, the visible line may become complicated, thus making it hard to navigate.

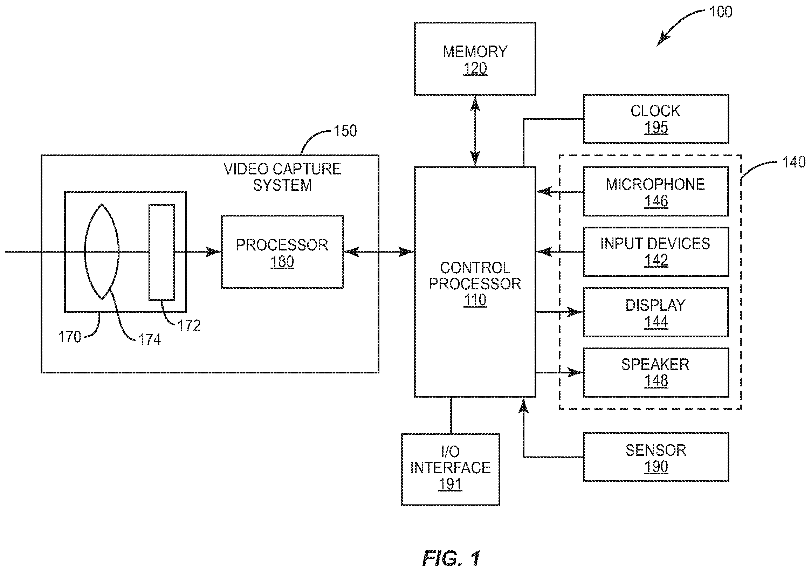

Other direct manipulation methods have analyzed the 3D space of the scene and skewed the video to remap a time dimension along one of the axes. However, the video may become skewed and difficult to see when the display is shown in this manner. Also, these methods include a visible trajectory path on the display. US2004239817 discloses a segments of interest identifying method for editing video footage includes using frame by frame motion, direction and discontinuity parameter values and changes to identify static, tracking and abrupt change interest segments such as scene-changes and detection of camera motion, see Fig. 1, step (103).

US6549643 discloses a method for selecting key-frames/scene changes from video data comprises the steps of: partitioning video data into segments; generating a temporal activity curve for dissimilarity measures based on one of frame differences, colour histograms, camera motion, and-a combination thereof, for each segment;and sampling the temporal activity curve to select at least one key-frame for each segment.

WO02073950 discloses an image processor compares the video images generated by a camera with reference image of the scene, to determine the image variation. The processor accesses a memory that stores the images, to locate an objective image without sequential scanning and interruption of processing of currently acquired image.

WO2007082167 discloses a video material is segmented into multiple segments that are compressed into multiple upload segments, which are uploaded from a local computing device to a remote computing device. Thumbnails for each upload segment are generated, displayed, edited, and saved on the remote computing device during uploading process.

### SUMMARY

The present application is directed to devices and methods of segmenting a video recording into a plurality of viewing segment. The segmentation may facilitate review of the video.

One embodiment is directed to a method of segmenting a video recording into a plurality of viewing segments and includes recording a video with a camera, detecting movement of the camera during the recording of the video based on motion data received from a motion sensor in the camera, and comparing the motion data to one or more criteria. If the motion data meets the one or more criteria, associating a segment divider with the video to coincide with a time of the detected movement.

Comparing the motion data to one or more criteria and associating the segment divider to the video to coincide with the time of the detected movement may both occur during the recording of the video.

Comparing the motion data to the one or more criteria and associating the segment divider to the video to coincide with the time of the detected movement may both be performed by a processing circuit within the camera.

Comparing the motion data to one or more criteria and associating the segment divider to the video to coincide with the time of the detected movement may both occur after the recording of the video.

Comparing the motion data to the one or more criteria and associating the segment divider to the video to coincide with the time of the detected movement may both be performed by a device that is separate from the camera.

The motion data meeting the one or more criteria may include the motion data indicating that the camera moved a greater amount than a threshold along one or more axes.

The threshold may be a predetermined setting stored in a memory circuit of the camera.

The motion data meeting the one or more criteria may include the motion data indicating that the movement occurred within a predetermined time period.

Another embodiment not part of the invention, is directed to a method of segmenting a video recording into a plurality of viewing segments. The method includes sampling images from a video, analyzing a first plurality of the sampled images and determining one or more static image areas of the images, analyzing a second plurality of the sampled images, detecting movement of the one or more static image areas between the first plurality of the sampled images and the second plurality of the sampled images, determining a difference metric indicative of the movement of the one or more static image areas between the first and second plurality of sampled images, and based on the differences exceeding a threshold, associating a segment divider to the video between the first and second plurality of sampled images.

Analyzing the first and second plurality of sampled images and detecting movement of the one or more static image areas may occur during recording of the video.

Determining the difference metric indicative of the movement of the one or more static image areas and detecting the movement of the one or more static image areas may both be performed by a processing circuit within the camera.

Determining the difference metric indicative of the movement of the one or more static image areas and detecting the movement of the one or more static image areas may both be performed at a device that is separate from the camera.

The first and second plurality of sampled images may include a background section and at least one actor. The background section may be the same in each of the first and second plurality of sampled images.

Another embodiment not part of the invention, is directed to a method of segmenting a video recording into a plurality of viewing segments. The method includes sampling images from a video, detecting movement within the sampled images based on changes in visual input between the sampled images, comparing the changes in the visual input to one or more criteria, and if the changes in the visual input meets the one or more criteria, associating a segment divider with the video to coincide with the detected movement.

The visual input may include motion of the camera that occurs during recording of the sampled images.

The changes in the visual input between the sampled images may include movement of an identified object in the sampled images.

The method may also include determining that the identified object moves from a first position to a second position and remains at the second position for a predetermined time period prior to associating the segment divider with the video.

Each of the sampled images may include a stationary background section.

Other embodiments are directed to a computer program product stored in a non-transitory computer-readable medium for segmenting a video into a plurality of viewing segments. The computer program product includes software instructions which, when run by a processor of a camera or a separate device, configures the camera or device to perform the methods stated above.

Another embodiment is directed to wireless electronic device as defined in independent claim 11. comprising a processor with one or more processing circuits configured to use the processor to implement the methods stated above.

### BRIEF DESCRIPTION OF THE DRAWINGS

Figure 1 is a schematic diagram of a camera.
Figure 2 is a flowchart diagram of an example method of segmenting a video recording based on movement of the camera.
Figure 3 is a flowchart diagram of another example method of segmenting a video recording based on movement of the camera.
Figure 4 is a flowchart diagram of an example method of segmenting a video recording based on image analysis to detect relative movement of the camera.
Figure 5 is a flowchart diagram of another example method of segmenting a video recording based on image analysis to detect relative movement of the camera.
Figure 6 is a schematic diagram of a device that receives a recorded video from a camera and performs the video segmenting.

### DETAILED DESCRIPTION

The present application is directed to methods and systems of segmenting a video into two or more different viewing segments. The segmentation of the video is based on movement of the camera. The movement may be determined based on a sensor associated with the camera. The movement may also be determined based on the relative movement of one or more objects in different frames of the recorded video. A divider may be associated with the video at a point where the movement occurs. The segmentation provides for a user to more quickly navigate through the video.

Figure 1 illustrates the main functional components of a camera 100. The camera 100 includes main control processor 110, memory circuit 120, user interface 140, and a video capture system 150. The main control processor 110 controls the overall operation of the camera 100 according to program instructions stored in the memory circuit 120. The main control processor 110 may comprise one or more circuits, microcontrollers, microprocessors, hardware, or a combination thereof. Memory circuit 120 comprises non-volatile memory, such as a read-only memory, for storing program instructions and data needs for operation, and volatile memory, such as random access memory, for storing temporary data required to carry out its operations.

The user interface 140 comprises one or more user input devices 142, a display 144, microphone 146, and speaker 148. The user input devices 142 may comprise a keypad, touchpad, function keys, scroll wheel, or other type of computer input device. The display 144 may comprise a conventional liquid crystal display (LCD) or touch screen display which also functions as a user input device. The microphone 146 converts acoustic signals to electrical audio signals for input to the control processor 110. Speaker 148 converts electrical audio signals output by the control processor 110 into acoustic signals that may be heard by a user. The camera 100 further includes a clock 195 which may be a separate component as illustrated in Figure 1, or may be integrated with the system processor 110.

The video capture system 150 includes one or more camera modules 170 and image processor 180. The camera module 170 includes an image sensor 172 and lens assembly 174. The lens assembly 174 projects an image onto the image sensor 172 which records the image by transmitting electrical signals to the image processor 180. Image sensor 172 may be any conventional image sensor, such as a charge-coupled device (CCD) or a complementary metal oxide semiconductor (CMOS) image sensor. Image processor 180 processes raw image data captured by the image sensor 172 for subsequent storage in memory 120 and/or output to the display 144. The image processor 180 may be independent from the main processor 110 or, alternatively, may be combined with the main processor 110. In some embodiments, the main processor 110 may function as an image processor with the aid of a digital signal processor or specialized image processing hardware.

Camera 100 also includes a sensor 190 to detect the movement of the camera 100. In one or more embodiments, this includes an angle of slope, elevation, or depression of the camera 100 with respect to gravity in one or more axes. In one embodiment, the sensor 190 comprises an accelerometer that measures the proper acceleration of the camera 100. One or more embodiments may also include a gyroscope and/or a magnetometer. In one or more embodiments, the sensor 190 includes a single device (e.g., a single accelerometer that measures movement along one or more axes). Other embodiments may include two or more different sensors that detect the movement of the camera 100 (e.g., two or more accelerometers that measure the movement along different axes and/or a gyroscope and an accelerometer that measure movement along different axes).

The camera 100 can be incorporated into any number of devices, such as a handheld digital camera, a smartphone that includes a camera, a tablet computing device, a laptop computing device, a standalone video camera, or any other imaging device. In one or more embodiments each of the lenses of the lens assembly 174 are microlenses, such that the lens assembly has a small size suitable for inclusion in a smartphone.

Camera 100 may further include an interface for outputting and receiving data from a separate device. In one or more embodiments, the interface 191 is configured to output the recorded video and any sensor readings to a separate device.

The camera 100 is configured to record moving visual images at a variety of different frame rates. To facilitate navigating the recorded images, the camera 100 is further configured to divide the visual images into different segments. Each of the segments includes a different scene that is detected by the camera 100. The detection methodology used by the camera may vary.

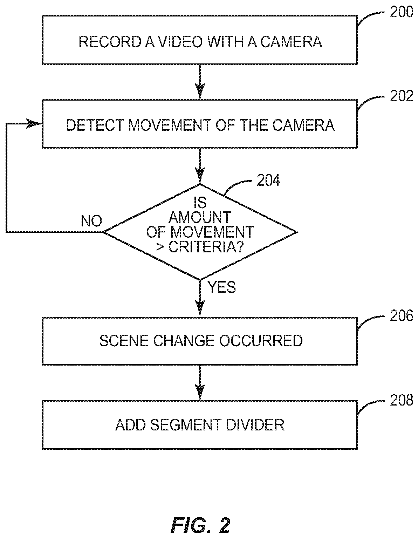

Figure 2 illustrates one method that the camera 100 performs in determining a change in a captured scene and segmenting the video into different viewing segments. The method includes recording a video with the video capture system 150 of the camera 100 (block 200). This may include the user grasping and orienting the camera 100 in the direction of the scene to be recorded. Once positioned, the user activates the capture system 150 and captures the images that are stored on the system memory 120. The sensor 190 determines the movement of the camera 100 while the scene is being recorded (step 202). The movement may be detected based on the position relative to a single axis, or relative to multiple different axes.

While the image is being captured by the recording system 150, the processor 110 monitors readings from the sensor 190 and determines whether the movement of the camera 100 has changed (block 204). The amount of change necessary for the processor 110 to determine a different scene may vary depending upon the context. In one embodiment, a threshold is stored in memory 120 and used to compare with the detected amount. The threshold may be a change in an angle of the camera 100 about one or more axis. In one or more embodiments, the threshold is set at a change of a number of degrees in one or more axes (e.g., 20°, 45°). Movement of the camera 100 above this amount is determined by the processor 110 to be a change in scene (block 206). Movement of less than or equal to this amount is determined as not being a scene change.

Requiring a minimum amount of movement prevents a false scene change detection. Small movements of the camera 100 may be caused during recording and do not constitute a new scene. Examples of small changes that do not cause a scene change may include the user repositioning the camera 100 or themselves while recording, and the user changing a setting on the camera 100, such as adjusting the position of the display 144 or adjusting the microphone 146. Each of these causes movement of the camera 100, but the movement is below the threshold and thus does not result in a scene change determination.

The threshold level may be a predetermined setting that is programmed in the memory 120 as a factory setting. The camera 100 may also provide for a variety of different thresholds (e.g., 10°, 25°, 40°). One of the thresholds may be a default setting, with the user able to select the desired threshold using the input devices 142 on the camera 100. In another embodiment, the user enters their own desired threshold through the input devices 142. Upon the detection of a scene change, a segment divider is added to the video that coincides with the time of the detected movement (block 208).

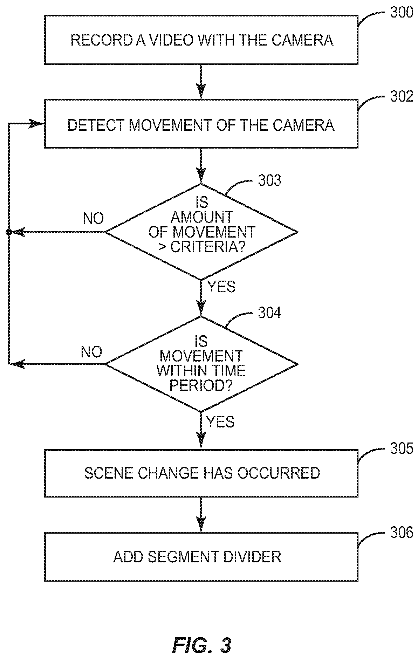

Figure 3 illustrates another embodiment of a method of segmenting a video recording based on movement of the camera. The method is similar to that of Figure 2 with blocks 300, 302, and 303 corresponding respectively with blocks 200, 202, and 204. The method of Figure 3 further determines whether the amount of movement has occurred within a predetermined time window (block 304). The check of movement within the time period prevents a false indication of a scene change when the camera intentionally moves with an object. For example, the user may rotate the camera 100 along a wide angular path to follow a boat moving across a lake, or to follow a bird flying across the sky. Although the amount of movement may be above the designated threshold, the extended time period over which the movement occurs indicates that the scene remains the same. In one or more embodiments, this may include the camera 100 panning to follow a moving object. If the movement has occurred within the time period, then the processor 110 determines that a scene change has occurred (block 305) and adds a segment divider (block 306). If the movement does not occur within the time period, the processor 110 determines that a scene change has not occurred.

The time period used for determining a scene change may be a predetermined setting that is programmed in the memory 120 as a factory setting. The camera 100 may also provide for a variety of different time periods (e.g., 30 seconds, 1 minute, 3 minutes). One of the thresholds may be a default setting, with the user able to select the desired threshold using the input devices 142 on the camera 100. In another embodiment, the user enters their own desired time period through the input devices 142.

The segmentation of the video may also be determined based on detected movement of the camera 100 through image processing analysis that does not include sensor readings. In one or more embodiments, the processor 110 uses optic flow which is a pattern of apparent motion of objects, surfaces, and edges in a visual scene caused by the relative motion between the camera 100 and the recorded scene.

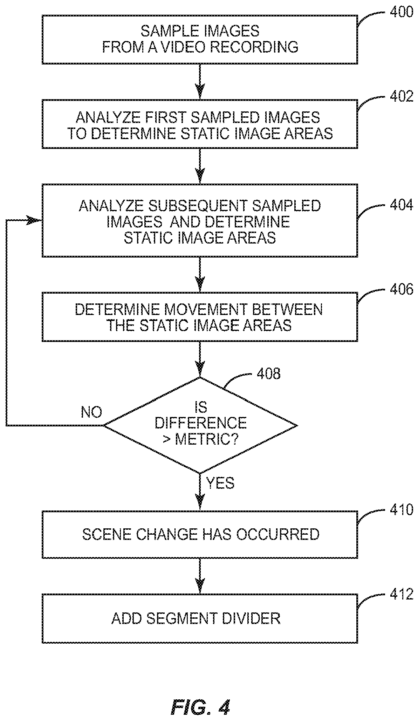

Figure 4 illustrates a method of determining the segments of a video recording using image analysis. The method includes sampling images from the recorded video (block 400). A first plurality of the sampled images is then analyzed to determine one or more static image areas that are shared by the plurality of images (block 402). The quantity of images included in the first plurality of images may vary, and may be consecutive within the video stream, or may be spaced apart within the image stream (e.g., every third frame, every fifth frame, etc.).

The analysis may include object recognition to identifying one or more objects within the image or the sequence of images. This may include but is not limited to one or more of edge detection techniques to find edges or surfaces of objects within each image. Other analysis techniques may also be employed, including but not limited to greyscale matching and gradient matching.

The analysis may be based on the entire captured image, or a smaller portion of the captured image. In one embodiment, the analysis includes just a central portion of the image and does not include the outer periphery. Using just a central portion of the image relies on the presumption that the user centers the object of interest when recording the scene. Limiting the analysis to a section of the overall image may lessen the processing requirements and may also result in faster processing time.

The analysis determines one or more static image areas within the first plurality of images. The analysis determines the one or more objects that are static throughout the images.

The method also includes analyzing a subsequent second plurality of sampled images of the video (block 404). The number of images in the second plurality may vary. The images are analyzed in a similar manner to determine the location (or absence) of the same one or more objects that were recognized in the first static image areas.

The methodology next includes determining the movement of the one or more objects between the static image areas (block 406). This movement may be determined in various manners. One determination includes establishing a reference using one or more images from the first plurality of sampled images as a basis. The location of one or more objects is determined relative to this reference. Next, the location of the one or more objects in the second plurality of sampled images is determined relative to the same reference. The movement of the one or more references is then determined based on a difference in the two locations.

In another embodiment, a position of the one or more images is determined relative to a reference point of the image frame. In one embodiment, the reference point is a center of the image frame. The movement of the images is then determined based on the movements of the relative images compared to the reference point.

It is then determined whether the movement of the one or more static image areas is greater than a predetermined metric (block 408). If the difference is greater, it is determined that a scene change has occurred (block 410) and a segment divider is added to the video (block 412).

If the difference is not greater than the metric, than another section of the video is analyzed and compared to the previous section. The process repeats throughout the video to place segment dividers between the scenes as necessary.

One example of using this image analysis methodology includes when the camera is pointed in a first direction to capture a first scene. In this example, the scene is of a child painting. The analysis may determine static images to be the child, a part of the child (e.g., the child's head or body), the paper that is being painted, and/or a chair the child is sitting on.

In this same example, the camera may then be turned to capture a second child sitting at a table and playing a game. At some point as the camera moves from the first child to the second child, the static images initially identified have moved relative to the camera 100. This movement is greater than the metric resulting in the detection of a change of scene.

Another example includes the camera recording an eagle flying across the sky. The camera pans across the sky to follow the eagle. The static objects detected in the images may include the entire eagle and/or parts of the eagle (e.g., head, tail, wings, feet). Because these objects remain relatively stationary throughout the different image frames and the different sections, there is no scene change detected despite the camera physically panning throughout the recording.

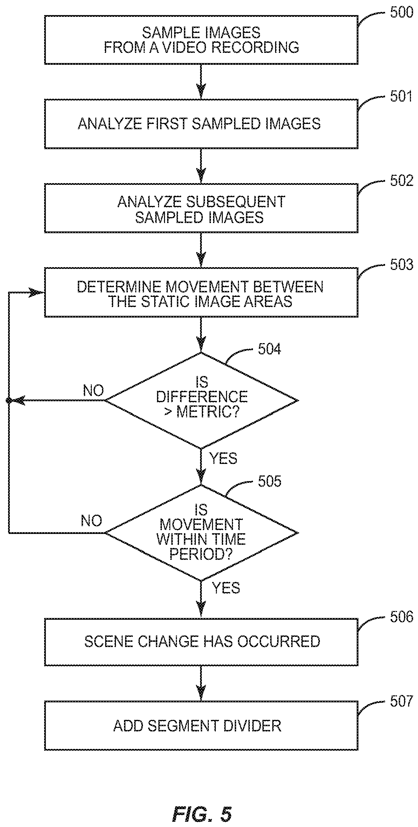

Figure 5 includes a similar method that also includes time as a factor in the determination of a scene change. The initial logic of the method is the same as that described in Figure 4 with blocks 500, 501, 502, 503, and 504 corresponding respectively to blocks 400, 402, 404, 406, and 408. The method also includes that when the difference between the static scenes is greater than a metric, the time period between the different sections is also compared against a threshold (block 505). If the detected movement between the sections does not occur within the time period, than there is no scene change and the analysis continues with subsequent sections. If the detected movement occurs within the time period, than a scene change has occurred (block 506) and a segment divider is added (block 507). This could be used to avoid adding many segment dividers to a video segment that features panning (and for which a single viewing segment may be desired).

In one or more embodiments using the methodology disclosed in Figures 4 and 5, the movement between the sampled images occurs without movement of the camera 100. The changes in the visual input in the recorded images are caused by movement of actors within the captured images, and not by the movement of the camera. In one or more embodiments, the recorded images each include a background section and one or more actors. The background section in each of the sampled images may be the same as the camera 100 does not move during the recording. The detected relative movement occurs due to movement of one or more of the actors move relative to the background section.

One embodiment of this situation is a camera 100 that is fixed in position to record images from a sports field. The camera 100 is fixed in position such that the same area of the field is recorded in each image (i.e., the background section of the field is the same in each image). Although the background section does not change, one or more actors (e.g., players) move relative to the field. Another embodiment is a fixed camera that records an image of a bird sitting in a tree. The camera remains stationary and the background section of the tree remains the same in each image as the actor (e.g., the bird) moves to different branches in the tree. In the various embodiments, the segment divider may be associated with the video in a different manner. This may include embedding the segment divider information within the video file (e.g., within individual image frames of the video). This may also include associating metadata with the video indicating the segment dividers (e.g. a separate segment divider file that may be bundled with the video file).

In one or more embodiments in which the camera 100 is in a fixed position and movement of one or more actors is detected, a timing parameter may be included to determine whether to include a segment divider. This may include determining movement of one or more of the actors from a first location to a second location and remaining at the second location for a predetermined period of time. For example, if video includes a bird in a tree with the bird moving from a first branch to a second branch. A segment divider may be included in the video between the movements if the bird remains at the second branch for a predetermined time period. However, a segment divider would not be included in the video if the bird moves from the second branch before the expiration of the predetermined time period (e.g., if the bird flies away or moves again to a third branch).

In one or more embodiments, the detection of the different video segments is performed by one or both of the processors 110, 180 of the camera 100. The detection may be performed at the time the video is being recorded, or may be performed at a time after recording.

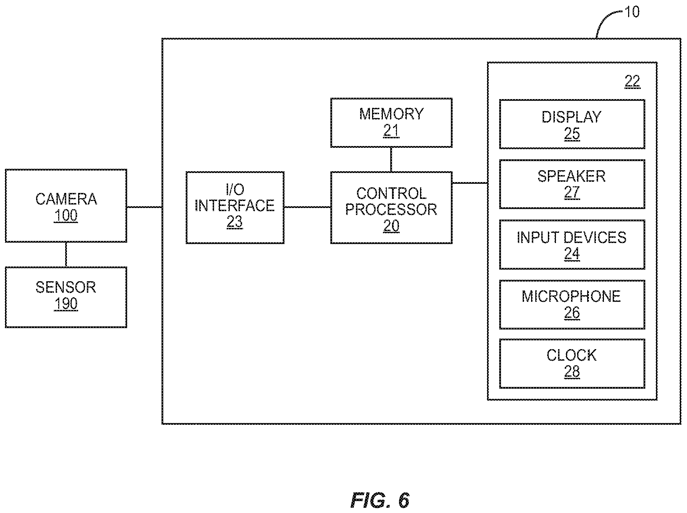

In one or more other embodiments, this detection of the video segments is performed by a separate device 10 as illustrated in Figure 6. Figure 6 illustrates the main functional components of the device 10 that includes a control processor 20, memory circuit 21, and an input/output (I/O) interface 23. The processor 20 controls the overall operation of the device 10 according to program instructions stored in the memory circuit 21. The processor 20 may comprise one or more circuits, microcontrollers, microprocessors, hardware, or a combination thereof. Memory 21 comprises non-volatile memory, such as a read-only memory, for storing program instructions and data needs for operation, and volatile memory, such as random access memory, for storing temporary data required to carry out its operations.

The interface 23 provides for receiving the video and any sensor data from the camera 100. The interface 23 may provide for receiving the information through a wired connection (e.g. USB) or through various wireless protocols.

The device 10 may also include a user interface 22 with one or more user input devices 24, a display 25, microphone 26, speaker 27, and a clock 28.

In one or more of the embodiments, the memory circuit 120, 21 comprises a non-transitory computer readable medium storing program instructions, such as a computer program product, that configure the camera 100 and device respectively to implement the techniques discussed above. In one or more embodiments, the computer program product is a program stored on the camera 100 or device 10 that facilitates segmenting of the video with little or no user interaction.

The present embodiments are to be considered in all respects as illustrative and not restrictive, and all changes coming within the meaning and equivalency range of the appended claims are intended to be embraced therein.

## Claims

1. A method of segmenting a video recording into a plurality of viewing segments, the method comprising:
recording a video with a camera (150);
the method **characterized by**:
detecting movement of the camera (150) during the recording of the video based on motion data received from a motion sensor (190) in the camera (150);
comparing the motion data to one or more criteria; and
if the motion data meets the one or more criteria, associating a segment divider with the video to coincide with a time of the detected movement.

2. The method of claim 1, wherein comparing the motion data to one or more criteria and associating the segment divider to the video to coincide with the time of the detected movement both occur during the recording of the video.

3. The method of claim 2, wherein comparing the motion data to the one or more criteria and associating the segment divider to the video to coincide with the time of the detected movement are both performed by a processing circuit (180) within the camera (150).

4. The method of claim 1, wherein comparing the motion data to one or more criteria and associating the segment divider to the video to coincide with the time of the detected movement both occur after the recording of the video.

5. The method of claim 4, wherein comparing the motion data to the one or more criteria and associating the segment divider to the video to coincide with the time of the detected movement are both performed by a device that is separate from the camera (150).

6. The method of one or more of the preceding claims, wherein the motion data meeting the one or more criteria comprises the motion data indicating that the camera (150) moved a greater amount than a threshold along one or more axes.

7. The method of claim 6, wherein the threshold is a predetermined setting stored in a memory circuit (120) of the camera (150).

8. The method of one or more of the preceding claims, further comprising the motion data meeting the one or more criteria comprises the motion data indicating that the movement occurred within a predetermined time period.

9. The method of one or more of the preceding claims,
wherein the motion data comprises at least one of: an angle of slope or elevation or a depression of the camera (100) with respect to gravity in one or more axes.

10. The method of one or more of the preceding claims,
wherein the motion sensor (190) comprises at least one of: an accelerometer; a gyroscope; or a magnetometer.

11. A wireless electronic device (100) comprising:
a processing circuit (110);
a memory circuit (120);
a video capture unit (150);
a motion sensor (190) configured to detect motion of the device (100);
the device (100) **characterized by**:
the processing circuit (110) configured to execute instructions stored in the memory circuit (120) to cause the device to:
record a video with the video capture unit (150);
detect movement of the device (100) during the recording of the video based on motion data received from the motion sensor (190);
compare the motion data to one or more criteria; and
if the motion data meets the one or more criteria, associate a segment divider with the video to coincide with a time of the detected movement.

12. The wireless electronic device of claim 11, wherein the one or more criteria comprises that a movement of the device (100) exceeded a movement threshold and that the movement of the device (100) occurred within a predetermined time period.

13. The wireless electronic device of claim 11 or claim 12, wherein the video capture unit (150) comprises a camera unit (170) that includes an image sensor (172) and a lens assembly (174).

14. The wireless electronic device of claim 13, wherein the video capture unit (150) further comprises a processing circuit (180) that is separate from the processing circuit (110).

15. The wireless electronic device of one or more of claims 11-14, further comprising a user interface (140) to receive signals regarding the video that is captured by the video capture unit (150).

## Patentansprüche

1. Verfahren zum Segmentieren einer Videoaufzeichnung in eine Mehrzahl von Betrachtungssegmenten, wobei das Verfahren umfasst:
Aufzeichnen eines Videos mit einer Kamera (150);
wobei das Verfahren **gekennzeichnet ist dadurch**, dass:
eine Bewegung der Kamera (150) während der Aufzeichnung des Videos auf Basis von Bewegungsdaten, die von einem Bewegungssensor (190) in der Kamera (150) empfangen werden, erfasst wird;
die Bewegungsdaten hinsichtlich eines oder mehrerer Kriterien zu vergleichen; und
falls die Bewegungsdaten das eine oder die mehreren Kriterien erfüllen, ein Segmentunterteiler dem Video derart zugeordnet wird, dass er mit einer Zeit der erkannten Bewegung übereinstimmt.

2. Verfahren gemäß Anspruch 1, wobei der Vergleich der Bewegungsdaten mit dem einen oder mehreren Kriterien und das Zuordnen des Segmentunterteilers zu dem Video, so dass er mit der Zeit der erfassten Bewegung übereinstimmt, beide während der Aufzeichnung des Videos stattfinden.

3. Verfahren gemäß Anspruch 2, wobei der Vergleich der Bewegungsdaten hinsichtlich des einen oder der mehreren Kriterien und die derartige Zuordnung des Segmentteilers zu dem Video, dass er mit der Zeit der erfassten Bewegung übereinstimmt, beide mittels einer Verarbeitungsschaltung (180) innerhalb der Kamera (150) ausgeführt werden.

4. Verfahren gemäß Anspruch 1, wobei der Vergleich der Bewegungsdaten mit einem oder mehreren Kriterien und die Zuordnung des Segmentteilers zu dem Video, so dass er mit der Zeit der erfassten Bewegung zusammenfällt, beide nach der Aufzeichnung des Videos erfolgen.

5. Verfahren gemäß Anspruch 4, wobei der Vergleich der Bewegungsdaten mit einem oder mehreren Kriterien und die Zuordnung des Segmentteilers zu dem Video, so dass er mit der Zeit der erfassten Bewegung übereinstimmt, beide von einer von der Kamera (150) getrennten Vorrichtung ausgeführt werden.

6. Verfahren gemäß einem oder mehreren der vorhergehenden Ansprüche, wobei die Bewegungsdaten, die das eine oder die mehreren Kriterien erfüllen, die Bewegungsdaten umfassen, die eine Bewegung der Kamera (150) um einen größeren Betrag als einen Schwellenwert entlang einer oder mehrerer Achsen kennzeichnen.

7. Verfahren gemäß Anspruch 6, wobei der Schwellenwert ein vorgegebener Einstellwert ist, der in einer Speicherschaltung (120) der Kamera (150) gespeichert ist.

8. Verfahren gemäß einem oder mehreren der vorhergehenden Ansprüche, wobei das Verfahren des Weiteren umfasst, dass die das eine oder die mehreren Kriterien erfüllenden Bewegungsdaten ein Kennzeichnen eines Stattfindens der Bewegung innerhalb einer vorbestimmten Zeitspanne aufweisen.

9. Verfahren gemäß einem oder mehreren der vorhergehenden Ansprüche,
wobei die Bewegungsdaten mindestens eines aufweisen von: einem Neigungswinkel oder einer Anhebung oder einer Absenkung der Kamera (100) in Bezug auf die Schwerkraft zu einer oder mehreren Achsen.

10. Verfahren gemäß einem oder mehreren der vorhergehenden Ansprüche, wobei der Bewegungssensor (190) zumindest eines aufweist von: einem Beschleunigungsmesser; einem Gyroskop; oder einem Magnetometer.

11. Drahtloses elektronisches Gerät (100), umfassend:
eine Verarbeitungsschaltung (110);
eine Speicherschaltung (120);
eine Videoaufnahmeeinheit (150);
einen Bewegungssensor (190), der konfiguriert ist, eine Bewegung des Geräts (100) zu erfassen;
wobei das Gerät (100) **dadurch gekennzeichnet ist, dass**:
die Verarbeitungsschaltung (110) konfiguriert ist, in der Speicherschaltung (120) gespeicherte Befehle auszuführen, um die Vorrichtung dazu zu veranlassen:
ein Video mit der Videoaufnahmeeinheit (150) aufzunehmen;
eine Bewegung des Geräts (100) während der Aufnahme des Videos basierend auf Bewegungsdaten, die von dem Bewegungssensor (190) empfangen werden, zu erfassen;
die Bewegungsdaten hinsichtlich eines oder mehrerer Kriterien zu vergleichen; und
falls die Bewegungsdaten das eine oder mehrere Kriterien erfüllen, dem Video einen Segmentunterteiler derart zuzuordnen, dass er mit einer Zeit der erkannten Bewegung zusammenfällt.

12. Drahtloses elektronisches Gerät gemäß Anspruch 11, wobei das eine oder die mehreren Kriterien umfassen, dass eine Bewegung des Geräts (100) einen Bewegungs-Schwellenwert überschritten hat und dass die Bewegung des Geräts (100) innerhalb einer vorbestimmten Zeitspanne stattgefunden hat.

13. Drahtloses elektronisches Gerät gemäß Anspruch 11 oder Anspruch 12, wobei die Videoaufnahmeeinheit (150) eine Kameraeinheit (170) umfasst, die einen Bildsensor (172) und eine Linsenanordnung (174) aufweist.

14. Drahtloses elektronisches Gerät gemäß Anspruch 13, wobei die Videoerfassungseinheit (150) ferner eine Verarbeitungsschaltung (180) aufweist, die gesondert von der Verarbeitungsschaltung (110) ist.

15. Drahtloses elektronisches Gerät gemäß einem oder mehreren der Ansprüche 11-14, wobei das drahtlose elektronische Gerät des Weiteren eine Benutzerschnittstelle (140) zum Empfangen von Signalen bezüglich des Videos, das von der Videoaufnahmeeinheit (150) aufgenommen wurde, aufweist.

## Revendications

1. Procédé de segmentation d'un enregistrement vidéo en une pluralité de segments de visualisation, le procédé comprenant l'étape consistant en :
l'enregistrement d'une vidéo avec une caméra (150) ;
le procédé étant **caractérisé par** les étapes consistant à :
détecter un déplacement de la caméra (150) pendant l'enregistrement de la vidéo sur la base de données de mouvement reçues à partir d'un capteur de mouvement (190) dans la caméra (150) ;
comparer les données de mouvement à un ou plusieurs critères ; et
si les données de mouvement répondent aux un ou plusieurs critères, associer un diviseur de segment à la vidéo pour qu'il coïncide avec un moment du déplacement détecté.

2. Procédé de la revendication 1, dans lequel la comparaison des données de mouvement à un ou plusieurs critères et l'association du diviseur de segment à la vidéo pour qu'il coïncide avec le moment du déplacement détecté ont lieu toutes deux pendant l'enregistrement de la vidéo.

3. Procédé de la revendication 2, dans lequel la comparaison des données de mouvement aux un ou plusieurs critères et l'association du diviseur de segment à la vidéo pour qu'il coïncide avec le moment du déplacement détecté sont toutes deux effectuées par un circuit de traitement (180) à l'intérieur de la caméra (150).

4. Procédé de la revendication 1, dans lequel la comparaison des données de mouvement à un ou plusieurs critères et l'association du diviseur de segment à la vidéo pour qu'il coïncide avec le moment du déplacement détecté ont lieu toutes après l'enregistrement de la vidéo.

5. Procédé de la revendication 4, dans lequel la comparaison des données de mouvement aux un ou plusieurs critères et l'association du diviseur de segment à la vidéo pour qu'il coïncide avec le moment du déplacement détecté sont toutes deux effectuées par un dispositif qui est séparé de la caméra (150).

6. Procédé selon une ou plusieurs des revendications précédentes, dans lequel les données de mouvement répondant aux un ou plusieurs critères comprennent les données de mouvement indiquant que la caméra (150) s'est déplacée au-delà d'un seuil le long d'un ou plusieurs axes.

7. Procédé de la revendication 6, dans lequel le seuil est un réglage prédéterminé stocké dans un circuit de mémoire (120) de la caméra (150).

8. Procédé selon une ou plusieurs des revendications précédentes, comprenant en outre le fait que les données de mouvement répondant aux un ou plusieurs critères comprennent les données de mouvement indiquant que le déplacement s'est produit à l'intérieur d'une période de temps prédéterminée.

9. Procédé selon une ou plusieurs des revendications précédentes,
dans lequel les données de mouvement comprennent au moins l'un parmi : un angle de pente ou d'élévation ou une dépression de la caméra (100) par rapport à la gravité sur un ou plusieurs axes.

10. Procédé selon une ou plusieurs des revendications précédentes,
dans lequel le capteur de mouvement (190) comprend au moins l'un parmi : un accéléromètre ; un gyroscope ; ou un magnétomètre.

11. Dispositif électronique sans fil (100) comprenant :
un circuit de traitement (110) ;
un circuit de mémoire (120) ;
une unité de capture vidéo (150) ;
un capteur de mouvement (190) configuré pour détecter un mouvement du dispositif (100) ;
le dispositif (100) étant **caractérisé en ce que** :
le circuit de traitement (110) est configuré pour exécuter des instructions stockées dans le circuit de mémoire (120) pour amener le dispositif à :
enregistrer une vidéo avec l'unité de capture vidéo (150) ;
détecter un déplacement du dispositif (100) pendant l'enregistrement de la vidéo sur la base de données de mouvement reçues à partir du capteur de mouvement (190) ;
comparer les données de mouvement à un ou plusieurs critères ; et
si les données de mouvement répondent aux un ou plusieurs critères, associer un diviseur de segment à la vidéo pour qu'il coïncide avec un moment du déplacement détecté.

12. Dispositif électronique sans fil selon la revendication 11, dans lequel les un ou plusieurs critères comprennent le fait qu'un déplacement du dispositif (100) a dépassé un seuil de déplacement et que le déplacement du dispositif (100) s'est produit pendant une période de temps prédéterminée.

13. Dispositif électronique sans fil selon la revendication 11 ou la revendication 12, dans lequel l'unité de capture vidéo (150) comprend une unité de caméra (170) qui comporte un capteur d'image (172) et un ensemble de lentille (174).

14. Dispositif électronique sans fil selon la revendication 13, dans lequel l'unité de capture vidéo (150) comprend en outre un circuit de traitement (180) qui est séparé du circuit de traitement (110).

15. Dispositif électronique sans fil selon une ou plusieurs des revendications 11 à 14, comprenant en outre une interface utilisateur (140) pour recevoir des signaux concernant la vidéo qui est capturée par l'unité de capture vidéo (150).
